# EUROPÄISCHE PATENTANMELDUNG

(11) **EP 1 469 300 A2**
(43) Veröffentlichungstag der Anmeldung: **20.10.2004**
(21) Anmeldenummer: 04103532.0
(22) Anmeldetag: 22.02.2003
(51) Int. Cl.: G01N 21/89

(54) **Verfahren zur Verwendung einer elektronischen Bildauswerteeinrichtung**

(30) Priorität: 26.02.2002 DE 10208286
(62) Teilanmeldung aus: 03717108.9
(71) Anmelder: Koenig & Bauer Aktiengesellschaft, 97080 Würzburg (DE)
(72) Erfinder: Stöber, Bernd, 33378, Rheda-Wiedenbrück (DE)

(57) **Zusammenfassung**

Die Erfindung betrifft ein Verfahren zur Verwendung einer elektronischen Bildauswerteeinrichtung mit zumindest einem Flächensensor, der eine Vielzahl lichtempfindlicher Pixel aufweist, wobei jeder Pixel in Abhängigkeit des an der entsprechenden Pixelposition empfangenen Lichteingangssignals ein elektrisches Ausgangssignal abgibt, dessen Stärke mit dem Lichteingangssignal korreliert und in einer Auswerteeinheit als Bildinformation auswertbar ist, wobei die Pixel des Flächensensors einzeln und/oder in Gruppen ansteuerbar und auswertbar sind, so dass frei wählbare Ausschnitte aus dem maximal beobachtbaren Abtastbereich selektiv auswertbar sind, wobei auf einer Bedruckstoffbahn, die mehrfach mit einem wiederkehrenden Format bedruckt ist, eine jedem Format zugeordnete Referenzmarkierung angeordnet ist, wobei mittels dieser Referenzmarkierung die Bewegung der Bedruckstoffbahn mit der Bildauswerteeinrichtung synchronisiert wird.

## Beschreibung

Die Erfindung betrifft ein Verfahren zur Verwendung einer elektronischen Bildauswerteeinrichtung gemäß dem Oberbegriff des Anspruchs 1.

Es sind elektronische Bildauswerteeinrichtungen zur Prüfung von Druckerzeugnissen bekannt, mit denen bestimmte Merkmale auf dem Druckerzeugnis aufgenommen und ausgewertet werden können. Zur Prüfung dieser speziellen Merkmale werden normalerweise einzelne angepasste Sensoren oder Kameras eingesetzt. Da die Position und die Anzahl von den auszuwertenden Merkmalen auf dem Druckerzeugnis grundsätzlich beliebig sein kann, ist die Anzahl und Positionierung der entsprechenden Sensoren oder Kameras in der Bildauswerteeinrichtung entsprechend anzupassen. Bei der Verwendung derartiger an einzelne Merkmale angepasster Kamera- oder Sensorsysteme ist es deshalb erforderlich, dass die einzelnen Sensoren oder Kameras verstellbar gelagert sind, um über den verschiedenen Positionen der auszuwertenden Merkmale positioniert werden zu können.

Eine Vermessung oder sichere Beurteilung der Merkmale benötigt einen festen Maßstab für beide Bildfelddimensionen. Der feste Maßstab lässt sich nur durch eine Bildaufnahme mit flächigen Bildsensoren gewährleisten, da die Bildsensorfläche selbst den räumlichen Bezug der abgebildeten Objekte zueinander darstellt. Bei Zeilenkamerasystemen ist der räumliche Bezug der abgebildeten Objekte wegen der nicht immer exakt einzuhaltenden zeitlichen Synchronisation der Bildzeilen zueinander, nicht mit der erforderlichen Zuverlässigkeit gewährleistet.

Die US 2002/0018600 A1 beschreibt einen Bildscanner, dessen Sensorfeld selektiv ausgelesen wird.

Die DE 41 36 461 C2 offenbart eine Vorrichtung zur großflächigen Inspektion von Druckerzeugnissen mit mehreren parallel betriebenen Flächensensoren.

Die WO 00/42381 A1 beschreibt eine Bildauswerteeinrichtung mit einem Flächensensor, der eine Vielzahl lichtempfindlicher Pixel aufweist, wobei die Pixel einzeln auswertbar sind, so dass frei wählbare Ausschnitte selektiv auswertbar sind.

Die EP 809 395 A2 offenbart ein Verfahren zum Betrieb eines Flächensensors, bei dem jeder Pixel ausgewählt und einzeln oder gruppenweise ausgelesen werden kann.

Der Erfindung liegt die Aufgabe zugrunde, ein Verfahren zur Verwendung einer elektronischen Bildauswerteeinrichtung zu schaffen.

Die Aufgabe wird erfindungsgemäß durch die Merkmale des Anspruchs 1 gelöst.

Die Erfindung beruht auf dem Grundgedanken in der elektronischen Bildauswerteeinrichtung Flächensensoren einzusetzen, deren Pixel einzeln und/oder in Gruppen angesteuert und ausgewertet werden können. Derartige frei adressierbare Flächensensoren erlauben es, dass aus dem maximal beobachtbaren Abtastbereich des Flächensensors, der sich aus der Größe des Flächensensors und der entsprechend davor angeordneten Optik ergibt, frei wählbare Ausschnitte selektiert werden können. Nur die Bilddaten dieser selektierten Ausschnitte werden dann zu der nachgeordneten Auswerteelektronik weitergeleitet, so dass die Bilddaten dort auswertbar sind. Die übrigen Bereiche des maximalen Abtastbereiches werden dagegen ausgeblendet und in der Auswerteelektronik nicht berücksichtigt. Im Ergebnis gelingt es dadurch, durch entsprechende Ansteuerung des Flächensensors die auszuwertenden Bilddaten je nach Anwendung zu selektieren. Damit können die auszuwertenden Merkmalen an beliebiger Stelle des Druckerzeugnisses aufgenommen werden, ohne dass eine mechanische Verstellung oder Justage einzelner Sensoren erforderlich wäre.

Außerdem können die Pixel mindestens eines Flächensensors, z. B. CMOS-Sensors, nur teilweise ausgelesen werden, so dass einzelne Bildbereiche selektiv ausgeblendet werden können, um die zu verarbeitende Menge an Bilddaten zu reduzieren. Aus diesen Daten kann sowohl die Lage eines Ausschnittes ermittelt werden als auch Bilddaten eines Ausschnittes mit reduzierter Auflösung.

Diese CMOS-Sensoren weisen teilweise einen einem Speicherbaustein entsprechenden Bildaufbau auf, so dass einzelne Pixel wie Speicherzellen abfragbar sind. Es müssen also nur Bildelemente ausgelesen werden, die tatsächlich auch ausgewertet werden sollen.

Um den mit der Bildauswerteeinrichtung maximal beobachtbaren Abtastbereich vergrößern zu können, ohne dementsprechend immer größere Flächensensoren einsetzen zu müssen, können in der Bildauswerteeinrichtung mehrere Flächensensoren vorgesehen werden. Die Bilddaten der einzelnen Flächensensoren werden dann gemeinsam in der nachgeordneten Auswerteeinrichtung ausgewertet. Im Ergebnis kann durch die Kombination mehrerer Flächensensoren erreicht werden, dass durch den Einsatz relativ preisgünstiger Standardbauteile ein sehr großer maximal beobachtbarer Abtastbereich durch die Bildauswerteeinrichtung ausgewertet werden kann.

Damit beim Einsatz mehrerer Flächensensoren keine Bereiche entstehen, die mit der Bildauswerteeinrichtung nicht auswertbar sind, sollten die maximal beobachtbaren Abtastbereiche der einzelnen Flächensensoren zumindest geringfügig überlappen. Die Bilddaten der einzelnen Flächensensoren aus den Überlappungsbereichen können dann in der nachgeordneten Auswerteeinrichtung derart berücksichtigt werden, dass der Überlappungsbereich nur einmal ausgewertet wird.

Um mit der Bildauswerteeinrichtung ein Druckerzeugnis mit hoher Effektivität auswerten zu können, sollte in der Bildauswerteeinrichtung eine Fördereinrichtung vorgesehen werden, mit der das Druckerzeugnis am Flächensensor vorbeigefördert werden kann. Dabei ist es besonders vorteilhaft, wenn die Pixel der Flächensensoren in Abhängigkeit der Förderbewegung des Druckerzeugnisses ansteuerbar und auswertbar sind. Dadurch kann im Ergebnis erreicht werden, dass die von den einzelnen Flächensensoren zur Beobachtung selektierten Ausschnitte in Abhängigkeit der Förderbewegung des Druckerzeugnisses selektiert werden.

Vielfach ist für eine zuverlässige Bildauswertung eine ausreichende Ausleuchtung des Druckerzeugnisses erforderlich. Deshalb sollte in der Bildauswerteeinrichtung eine Beleuchtungseinrichtung, insbesondere eine Blitzbeleuchtung, vorgesehen sein. Diese Blitzbeleuchtung erzeugt mit einer bestimmten Wiederholfrequenz Lichtblitze.

Alternativ zu einer Blitzbeleuchtung kann beim Vorhandensein eines elektronischen Vollbildshutters auch eine Konstantlichtbeleuchtung eingesetzt werden.

Der Vollbildshutter begrenzt auf elektronischem Weg die zeitliche Integration des Lichtes auf den Bildsensor.

Häufig werden elektronische Bildauswerteeinrichtungen dazu eingesetzt Bedruckstoffbahnen, die mehrfach mit einem wiederkehrenden Format bedruckt sind, elektronisch auszuwerten. Bei derartigen Auswerteaufgaben ist es besonders vorteilhaft, wenn auf der Bedruckstoffbahn jedem einzelnen Format eine Referenzmarkierung zugeordnet ist. In der elektronischen Bildauswerteeinrichtung sollte dann eine Sensoreinrichtung vorgesehen werden, mit der die Referenzmarkierung detektiert werden kann. Dadurch ist es möglich, dass die Sensoreinrichtung ein Synchronisationssignal abgibt, mit der die Bildauswerteeinrichtung mit der Bewegung der Bedruckstoffbahn synchronisiert werden kann.

Ausführungsbeispiele der Erfindung sind in den Zeichnungen dargestellt und werden im folgenden näher beschrieben.

Es zeigen:
- Fig. 1: den schematischen Aufbau einer erfindungsgemäßen Bildauswerteeinrichtung;
- Fig. 2: ein auszuwertendes Druckerzeugnis mit verschiedenen auszuwertenden Merkmalen in perspektivischer Ansicht.

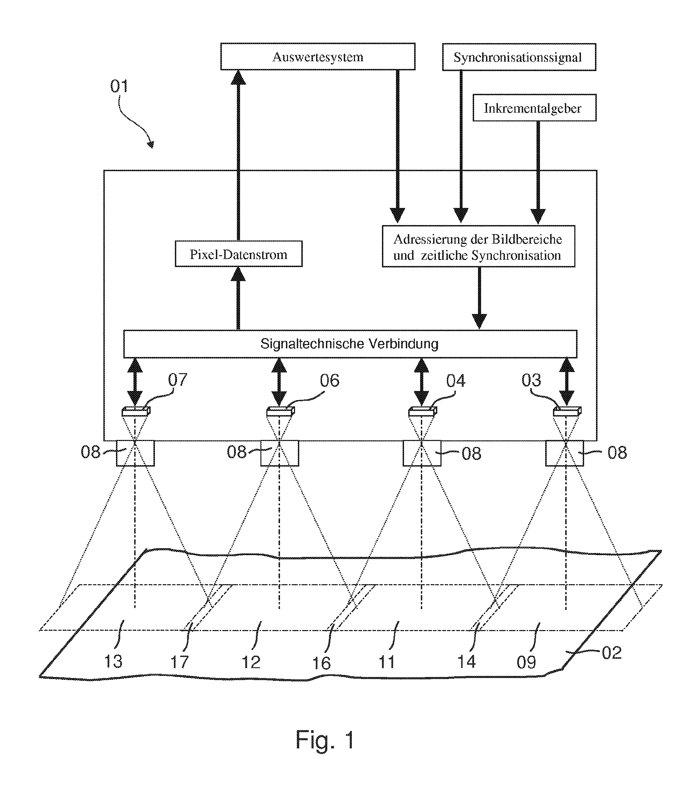

Bei der in Fig. 1 schematisch dargestellten Bildauswerteeinrichtung 01 kann eine Bedruckstoffbahn 02 unter einem Flächensensorsystem mit vier Flächensensoren 03, 04, 06 und 07 durchgefördert werden. Diese Flächensensoren 03 bis 07 sind an einem gemeinsamen Trägerelement angeordnet. Jedem der Flächensensoren 03 bis 07 ist eine Optik 08 zugeordnet, durch die ein bestimmter Bildbereich auf der Bedruckstoffbahn 02 auf die lichtempfindlichen Pixel der Flächensensoren 03 bis 07 abgebildet wird.

Aus der Bauart der Flächensensoren 03 bis 07, den Eigenschaften der Optiken 08 und dem Abstand zwischen den Optiken 08 und der Druckstoffbahn 02 ergeben sich maximal beobachtbare Abtastbereiche 09; 11; 12 und 13, die mittels der Flächensensoren 03 bis 07 ausgewertet werden können. Die maximal beobachtbaren Abtastbereiche 09 bis 13 sind jeweils ungefähr rechteckig, wobei jeweils benachbarte Abtastbereiche in Überlappbereichen 14; 16 und 17 überlappen. Im Ergebnis kann durch Kombination der Flächensensoren 03 bis 07 ein insgesamt rechteckiger Gesamtabtastbereich ausgewertet werden, dessen Breite geringfügig größer ist als die Breite der Druckstoffbahn 02.

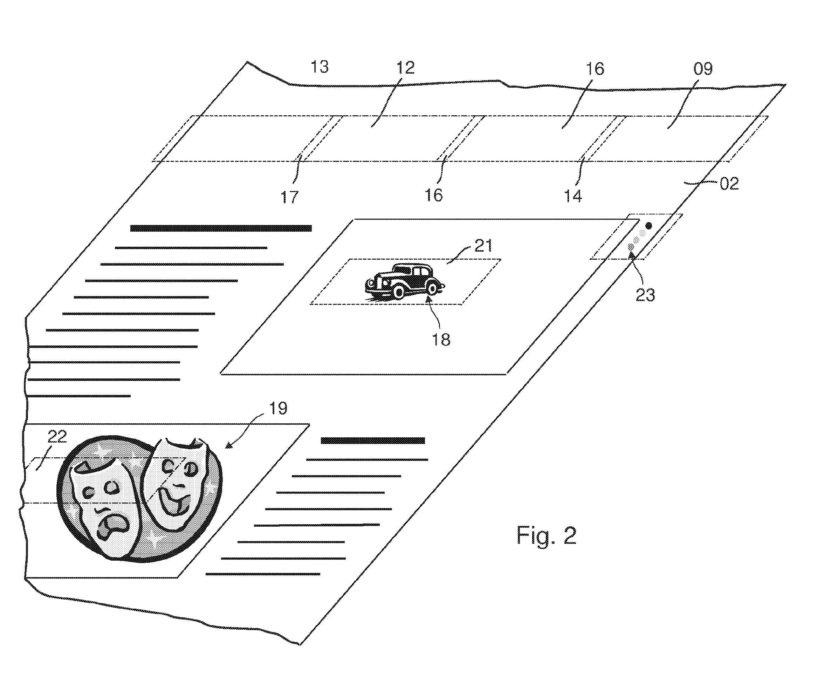

In Fig. 2 ist die Druckstoffbahn 02 in bedruckter Form dargestellt, wobei auf der Bedruckstoffbahn 02 in wiederholten Formaten die Bildmotive 18 und 19 aufgedruckt sind. Außerdem ist auf die Bedruckstoffbahn 02 außerdem noch eine jedem Format zugeordnete Referenzmarkierung 23 aufgedruckt. Zur Bewertung des Druckergebnisses auf der Druckstoffbahn 02 sollen nun jeweils rechteckige Ausschnitte 21 und 22 aus dem Druckbild im Bereich der Bildmotive 18 und 19 mittels der Bildauswerteeinrichtung 01 selektiv ausgewertet und mit Referenzdaten verglichen werden.

Diese Referenzmarkierung 23 kann auch einen Erfassungsbereich darstellen, der z. B. bezüglich der Lage der Farbfelder zueinander beurteilt werden könnte (Registervermessung). Die Referenzmarkierung 23 kann auch für den Formatbezug hergenommen werden.

Die Erfassung der Referenzmarkierung 23 muß jedoch nicht unbedingt mit dem Multiflächensensor selbst erfolgen. Es kann auch ein zusätzlicher Sensor angeordnet sein, der nur logisch dem System zugeordnet wird. Zudem könnte eine Synchronisation auch mit dem Format auch aus einem Maschinensignal abgeleitet werden.

Dazu wird die Bedruckstoffbahn 02 unter den Flächensensoren 03 bis 07 hindurchgefördert. Sobald die Referenzmarkierung 23 detektiert worden ist wird ein entsprechendes Synchronisationssignal generiert, so dass anschließend zunächst der Ausschnitt 21 und anschließend der Ausschnitt 22 lagegenau mittels der Bildsensoren 03 bis 07 aufgenommen und ausgewertet werden kann. Dabei werden jeweils lediglich die Pixel der Flächensensoren 03 und 07 angesteuert, so dass nur die Ausschnitte 21 und 22 aufgenommen werden. Die restlichen Bereiche der Druckstoffbahn 02, die unter den Bildsensoren 03 bis 07 durchgeführt werden, werden dagegen ausgeblendet.

### Bezugszeichenliste

- 01: Bildauswerteeinrichtung
- 02: Druckstoffbahn, Bedruckstoffbahn, Druckerzeugnis
- 03: Flächensensor, Bildsensor
- 04: Flächensensor, Bildsensor
- 05: -
- 06: Flächensensor, Bildsensor
- 07: Flächensensor, Bildsensor
- 08: Optik
- 09: maximaler Abtastbereich (Flächensensor 03)
- 10: -
- 11: maximaler Abtastbereich (Flächensensor 04)
- 12: maximaler Abtastbereich (Flächensensor 06)
- 13: maximaler Abtastbereich (Flächensensor 07)
- 14: Überlappbereich
- 15: -
- 16: Überlappbereich
- 17: Überlappbereich
- 18: Bildmotiv
- 19: Bildmotiv
- 20: -
- 21: Ausschnitt
- 22: Ausschnitt
- 23: Referenzmarkierung

## Patentansprüche

1. Verfahren zur Verwendung einer elektronischen Bildauswerteeinrichtung (01) mit zumindest einem Flächensensor (03; 04; 06; 07), der eine Vielzahl lichtempfindlicher Pixel aufweist, wobei jeder Pixel in Abhängigkeit des an der entsprechenden Pixelposition empfangenen Lichteingangssignals ein elektrisches Ausgangssignal abgibt, dessen Stärke mit dem Lichteingangssignal korreliert und in einer Auswerteeinheit als Bildinformation auswertbar ist, wobei die Pixel des Flächensensors (03; 04; 06; 07) einzeln und/oder in Gruppen ansteuerbar und auswertbar sind, so dass frei wählbare Ausschnitte (21; 22) aus dem maximal beobachtbaren Abtastbereich (09; 11; 12; 13) selektiv auswertbar sind, wobei auf einer Bedruckstoffbahn (02), die mehrfach mit einem wiederkehrenden Format bedruckt ist, eine jedem Format zugeordnete Referenzmarkierung (23) angeordnet ist, wobei mittels dieser Referenzmarkierung (23) die Bewegung der Bedruckstoffbahn (02) mit der Bildauswerteeinrichtung (01) synchronisiert wird.

2. Verfahren zur Verwendung einer elektronischen Bildauswerteeinrichtung (01) nach Anspruch 1, **dadurch gekennzeichnet, dass** der maximal beobachtbare Abtastbereich (09; 11; 12; 13) des Flächensensors (03; 04; 06; 07) rechteckig ist.

3. Verfahren zur Verwendung einer elektronischen Bildauswerteeinrichtung (01) nach Anspruch 1, **dadurch gekennzeichnet, dass** in der Bildauswerteeinrichtung (01) mehrere Flächensensoren (03; 04; 06; 07) vorgesehen sind.

4. Verfahren zur Verwendung einer elektronischen Bildauswerteeinrichtung (01) nach Anspruch 3, **dadurch gekennzeichnet, dass** die maximal beobachtbaren Abtastbereiche (09; 11; 12; 13) der einzelnen Flächensensoren (03; 04; 06; 07) in Überlappungsbereichen (14; 16; 17) überlappen.

5. Verfahren zur Verwendung einer elektronischen Bildauswerteeinrichtung (01) nach 3 oder 4, **dadurch gekennzeichnet, dass** die maximal beobachtbaren Abtastbereiche (09; 11; 12; 13) der Flächensensoren (03; 04; 06; 07) zusammen einen rechteckigen Gesamtabtastbereich ergeben.

6. Verfahren zur Verwendung einer elektronischen Bildauswerteeinrichtung (01) nach Anspruch 3, **dadurch gekennzeichnet, dass** mehrere Flächensensoren (03; 04; 06; 07) auf einem gemeinsamen Trägerelement angeordnet sind.

7. Verfahren zur Verwendung einer elektronischen Bildauswerteeinrichtung (01) nach Anspruch 1, **dadurch gekennzeichnet, dass** in der Bildauswerteeinrichtung (01) eine Beleuchtungseinrichtung vorgesehen ist, mit der das Druckerzeugnis (02) ausgeleuchtet werden kann.

8. Verfahren zur Verwendung einer elektronischen Bildauswerteeinrichtung (01) nach Anspruch 7, **dadurch gekennzeichnet, dass** die Beleuchtungseinrichtung in der Art einer Blitzbeleuchtung ausgebildet ist.

9. Verfahren zur Verwendung einer elektronischen Bildauswerteeinrichtung (01) nach Anspruch 8, **dadurch gekennzeichnet, dass** die Blitzbeleuchtung mit einer bestimmten Wiederholfrequenz Lichtblitze erzeugt.

10. Verfahren zur Verwendung einer elektronischen Bildauswerteeinrichtung (01) nach Anspruch 1, **dadurch gekennzeichnet, dass** in der Bildauswerteeinrichtung (01) ein Vollbildshutter vorgesehen ist.

11. Verfahren zur Verwendung einer elektronischen Bildauswerteeinrichtung (01) nach Anspruch 1, **dadurch gekennzeichnet, dass** ein Synchronisationssignal zur Synchronisation der Bildauswerteeinrichtung (01) mit der Bewegung der Bedruckstoffbahn (02) ausgebende Sensoreinrichtung angeordnet ist.

12. Verfahren zur Verwendung einer elektronischen Bildauswerteeinrichtung (01) nach Anspruch 11, **dadurch gekennzeichnet, dass** in der Bildauswerteeinrichtung (01) die Sensoreinrichtung vorgesehen ist, das heißt ein Flächensensor (03; 04; 06; 07) zur Synchronisation verwendet wird.

13. Verfahren zur Verwendung einer elektronischen Bildauswerteeinrichtung (01) nach Anspruch 11, **dadurch gekennzeichnet, dass** zusätzlich zur Bildauswerteeinrichtung (01) eine zusätzliche Sensoreinrichtung angeordnet ist, das heißt zusätzlich zu dem Flächensensor oder den Flächensensoren der Bildauswerteeinrichtung (01) ein weiterer Sensor vorgesehen ist.

14. Verfahren zur Verwendung einer elektronischen Bildauswerteeinrichtung (01) nach Anspruch 1, **dadurch gekennzeichnet, dass** jedem Flächensensor (03; 04; 06; 07) eine eigene Optik (08) zugeordnet ist.

15. Verfahren zur Verwendung einer elektronischen Bildauswerteeinrichtung (01) nach Anspruch 1, **dadurch gekennzeichnet, dass** der Flächensensor (03; 04; 06; 07) als CMOS-Sensor ausgebildet ist.
